# EUROPEAN PATENT APPLICATION

(11) **EP 4 760 339 A1**
(43) Date of publication of application: **17.06.2026**
(21) Application number: 24853550.2
(22) Date of filing: 29.07.2024
(51) Int. Cl.: G01S 7/484, G02B 27/09

(54) **OPTICAL EMISSION MODULE, EMISSION APPARATUS, DETECTION APPARATUS AND TERMINAL**

(30) Priority: 15.08.2023 CN 202311033902
(71) Applicant: Yinwang Intelligent Technologies Co., Ltd., Shenzhen, Guangdong 518110 (CN)
(72) Inventor: ZHANG, Hongyuan, Shenzhen, Guangdong 518129 (CN); XIAO, Xisheng, Shenzhen, Guangdong 518129 (CN); LIU, Jun, Shenzhen, Guangdong 518129 (CN)
(74) Representative: Maiwald GmbH
(86) International application number: PCT/CN2024/108258
(87) International publication number: WO 2025/036138

(57) **Abstract**

An optical transmitter module (40), a transmitting apparatus (20), a detection apparatus (10), and a terminal are provided, and are applied to the field of detection technologies. The optical transmitter module (40) includes M light sources (60) and a metalens (50), and M is an integer greater than 1. The metalens (50) is configured to process first light beams from the M light sources (60) to obtain a second light beam. On one hand, a light-emitting region formed by a plurality of light sources (60) can improve energy density of the second light beam, and make energy distribution of the second light beam more uniform. On the other hand, the metalens (50) is used to process a light beam emitted by the light source (60), so that an overall volume of the transmitting apparatus (20) can be significantly reduced while achieving light field adjustment and control and improving device integration. Using the optical transmitter module (40) in the detection apparatus (10) facilitates miniaturization of the detection apparatus (10).

## Description

This application claims priority to Chinese Patent Application No. 202311033902.0, filed with the China National Intellectual Property Administration on August 15, 2023 and entitled "OPTICAL TRANSMITTER MODULE, TRANSMITTING APPARATUS, DETECTION APPARATUS, AND TERMINAL", which is incorporated herein by reference in its entirety.

### TECHNICAL FIELD

This application relates to detection technologies, and is applied to fields such as intelligent driving, intelligent transportation, surveying and mapping, and intelligent manufacturing, and in particular, to an optical transmitter module, a transmitting apparatus, a detection apparatus, and a terminal.

### BACKGROUND

With development of information technologies and computer vision, detection technologies develop rapidly, and various detection apparatuses bring great convenience to people's life and travel. For example, an advanced driver assistance system (advanced driver assistance system, ADAS) plays a very important role in an intelligent vehicle. The advanced driver assistance system may use a detection apparatus mounted on the vehicle to detect an ambient environment, collect data, identify static and moving objects, and the like in a traveling process of the vehicle, and to perform systematic calculation and analysis based on map data of a navigator, so that a driver can be aware of potential hazards in advance, effectively improving driving comfort and safety of the vehicle. The detection apparatus may be considered as an "eye" for sensing an environment, and the detection apparatus includes a vision system sensor like a camera, and radar system sensors such as a millimeter-wave radar, a lidar, and an ultrasonic radar.

The lidar (light detection and ranging, Lidar, also referred to as a light detection and ranging apparatus) has advantages of high resolution, good detection performance, and strong concealment, and is one of important detection apparatuses in the sensing field. A transmitting apparatus of the lidar is one of core components of the lidar, and is configured to propagate a light beam emitted by a light source to to-be-detected object space to detect a target.

The transmitting apparatus needs a light source to generate a light beam. Because energy of the light beam directly emitted by the light source is dispersed, energy density of a light spot formed during detection is low, affecting detection performance of the lidar, and especially affecting a ranging capability of the lidar. In some solutions, the light beam generated by the light source is shaped through a lens, to increase the energy density of the light spot. However, using an optical lens significantly increases a volume of the transmitting apparatus, and hinders miniaturization development of the lidar. In addition, even if shaping is performed, energy of the light spot generated by the transmitting apparatus is still unevenly distributed, affecting detection effect.

How to reduce the volume of the transmitting apparatus while increasing the energy density of the light spot is a hot topic that is being researched by a person skilled in the art.

### SUMMARY

Embodiments of this application provide an optical transmitter module, a transmitting apparatus, a detection apparatus, and a terminal, to improve energy density of a light spot formed by an emitted light beam, and improve device integration.

According to a first aspect, an embodiment of this application provides an optical transmitter module, where the optical transmitter module includes M light sources and a first metalens, and M is an integer greater than 1. The first metalens includes a metalens, and the first metalens is configured to process first light beams from the M light sources to obtain a second light beam.

In the foregoing aspect, processing of the light beam by the first metalens includes performing light field adjustment and control on the first light beam. A light field is a set of light rays in space, and includes a position and an angle of the light ray in space. The light field adjustment and control is adjustment and control of a light field of a light beam. The light field adjustment and control may include one or more of the following processing: convergence, collimation, divergence, splitting, reflection, refraction, homogenization, or light filtering, or may further include adjustment of one or more attributes of a light beam, such as pointing angle, divergence angle, phase, resonance, polarization, and dispersion.

The optical transmitter module in this embodiment of this application includes a plurality of light sources. The first light beam formed by the plurality of light sources is processed by the first metalens to form the second light beam. The second light beam may be used for a plurality of functions, such as ranging, and surveying and mapping.

On one hand, power of the light beam emitted by a plurality of light sources is superposition of power of all light sources in the plurality of light sources, and energy density of the emitted light beam is high. In addition, the plurality of light sources are arranged to form a light-emitting region, so that energy distribution of the emitted light beam is more uniform. In addition, a design of the plurality of light sources can also reduce difficulty of light field adjustment and control on the light beam. In particular, in processes such as collimating, homogenizing, adjusting and controlling a pointing angle of the light beam, the light beams formed by the plurality of light sources can achieve better light field adjustment and control effect. For example, the first light beam emitted by the plurality of light sources may be collimated by the first metalens, to form the second light beam with more concentrated power density and uniform energy distribution in light spots of the second light beam. In a far-field detection (for example, > 100 meters) scenario, the second light beam can still maintain large power and uniform light spots at a long distance, thereby significantly improving detection effect.

On the other hand, the metalens is an optical element with a thickness at a nanometer level and a micrometer level, and can implement a plurality of light beam processing, for example, collimation, homogenization, or pointing angle adjustment and control. In contrast, a thickness of a conventional geometric lens is usually at a millimeter level. Therefore, the metalens is used to process a light beam emitted by the plurality of light source, so that an overall volume of the transmitting apparatus can be significantly reduced while achieving light field adjustment and control and improving device integration. Using the optical transmitter module in the detection apparatus facilitates miniaturization of the detection apparatus.

Optionally, the light source may be a laser. Further, the laser may be, for example, a vertical-cavity surface-emitting laser or an edge emitting laser (edge emitting laser, EEL).

In a possible implementation of the first aspect, the first metalens includes a substrate and a first micro-nano structure layer borne on the substrate, and the first micro-nano structure layer includes a plurality of first nano structure units.

The substrate is configured to bear the micro-nano structure layer, and is usually made of a transparent material, for example, glass or crystal. In some scenarios, the substrate is a high-transmittance material. In this way, energy losses of a light beam can be reduced, and energy density of a light beam propagated to the object space can be increased. For example, a transmittance of the high-transmittance material is greater than a first threshold. The first threshold may be predefined (for example, specified in an industry) or preset. For example, the high-transmittance material may be a material whose transmittance is greater than 99%, or the high-transmittance material may be a material whose transmittance is greater than 90%.

The nano structure unit may be a structure like a nano prism or a nano cylinder. Further, the nano structure units may be arranged on the substrate based on a preset first phase.

In still another possible implementation of the first aspect, the first metalens further includes a second micro-nano structure layer borne on the substrate, and the second micro-nano structure layer includes a plurality of second nano structure units. The first micro-nano structure layer and the second micro-nano structure layer may have a same light field adjustment and control function, or may have different light field adjustment and control functions. For example, the first micro-nano structure layer and the second micro-nano structure layer may be jointly used for light beam collimation.

In the foregoing implementation, the first metalens may include the plurality of micro-nano structure layers, and the plurality of micro-nano structure layers are used to jointly process a light beam, so that more sophisticated and accurate light field adjustment and control effect can be implemented.

Optionally, the second micro-nano structure layer and the first micro-nano structure layer may be located on a same substrate. For example, the first micro-nano structure layer and the second micro-nano structure layer are located on two opposite surfaces of the substrate. In this way, a size of the optical transmitter module can be further reduced.

Alternatively, the second micro-nano structure layer and the first micro-nano structure layer may be located on different substrates. This design can reduce production difficulty and reduce costs. It should be understood that even if the first micro-nano structure layer and the second micro-nano structure layer are located on different substrates, a total thickness of the plurality of micro-nano structure layers and the plurality of substrates is still far less than a thickness of a common optical lens, and an overall volume of the optical transmitter module is still small.

In still another possible implementation of the first aspect, a cross-sectional area of a light transmission surface of the first metalens is greater than an area of a light-emitting region, and the light-emitting region is a region formed by light-emitting surfaces surrounding the M light sources. For example, the light-emitting region includes the light-emitting surfaces of the M light sources, and further includes a gap between two adjacent light sources.

In some scenarios, because a gap between light sources is small, if a light beam of each light source is processed through one metalens, a size of the metalens is limited by a size of the light source, and a range for light field adjustment and control is limited. In addition, a light spot energy arrangement form of a light source is undiversified, which further limits effect of light field adjustment and control. The foregoing implementation provides a design of a size of the metalens and a size of the plurality of light sources. A size of the light transmission surface of the metalens is greater than a size of the light-emitting surface of the light-emitting region. This can enable one metalens (including one or more of micro-nano structure layers) to process the light beam from the plurality of light sources. This not only reduces a design difficulty of the optical transmitter module, but also enables flexible design of light spot energy distribution based on the light beam from the plurality of light sources, thereby meeting a requirement of a user for sophisticated light field adjustment and control effect and improving quality of the light beam generated by the optical transmitter module.

In another possible implementation of the first aspect, an area of light beam cross-sections of the first light beams emitted by the M light sources on the metalens is less than the area of the light transmission surface of the metalens that is close to the first light beam. In other words, all light beams emitted by the M light sources are included in the metalens. Optionally, before passing through the metalens, the first light beams may be converged.

In a further possible implementation of the first aspect, the first light beam may be incident on a central part of the metalens, to avoid being close to an edge part of the first metalens. In this way, distortion of the light beam is avoided at an edge part, light beam shaping quality is ensured, and usability of the light beam generated by the optical transmitter module is improved.

For example, the first light beams emitted by the M light sources are incident on the light transmission surface of the metalens, a minimum distance between the first light beam passing through the metalens and an edge of the light transmission surface of the metalens is greater than a first threshold, and the first threshold is greater than 0. In other words, the first light beam may not be close to an edge of the metalens, so that distortion of the light beam can be avoided.

Optionally, the foregoing implementation is applied to a case in which an emitted light beam has a large field of view.

In still another possible implementation of the first aspect, the first metalens is configured to collimate the first light beam. Further, the second light beam forms M spots in angular space, and arrangement of the M spots is centrosymmetric with respect to arrangement of the M light sources in an optical transmitter unit.

In still another possible implementation of the first aspect, a pointing angle of the second light beam is different from a pointing angle of the first light beam. In this case, the first metalens may be configured to adjust and control a pointing angle of a light beam of the light source, to implement a plurality of pointing angle designs, and improve usability of the light beam. Further, the first metalens is configured to collimate the first light beam and adjust and control a pointing angle to obtain the second light beam, so that the second light beam is propagated to a specified pointing angle while energy density of the light beam is improved. In this way, the second light beam can be used for accurate detection in a region and has good ranging effect.

In another possible implementation of the first aspect, there is an offset between a geometric center of the M light sources and a geometric center of the first metalens. Further, the offset is an offset in a perspective along a main optical axis of the light beam.

In some solutions, the geometric center of the light source is misplaced from a geometric center of a light beam unit, so that the main optical axis of the light beam emitted by the light source is offset from a main optical axis of the first metalens, and the second light beam may point to different angles after passing through the first metalens.

In some other solutions, the transmitting apparatus includes a plurality of optical transmitter modules, and directions and distances of offsets of the plurality of optical transmitter modules are different. Therefore, light beams transmitted by the plurality of optical transmitter modules are uniformed in angular space, an energy gap between light sources is filled, energy distribution uniformity is improved, and detection performance can be improved.

According to a second aspect, an embodiment of this application provides a transmitting apparatus, where the transmitting apparatus includes N optical transmitter modules according to any one of the first aspect, and N is an integer greater than 0.

N groups of optical lens groups may further process the light beam processed by the metalens, so that the emitted light beam better meets user requirements.

Optionally, the optical lens group may include one or more lenses.

For example, the optical lens group may include one lens, and the lens may be configured to process light beams generated by the N optical transmitter modules. Alternatively, when N>1, the optical lens group may be configured to process light beams generated by a part of the N optical transmitter modules.

For another example, the optical lens group may include a plurality of lenses, and the plurality of lenses may include a plurality of lenses arranged in front and rear or may include a lens array. For example, the lens array may include N lenses, and each lens is configured to process a light beam generated by one optical transmitter module.

In still another possible implementation of the second aspect, the optical lens group includes a first optical lens. The first optical lens is configured to collimate the light beam from the N optical transmitter modules in a first direction, to obtain a linear light beam. In this way, a line light spot with high energy density can be obtained, and energy distribution in line light spots is uniform, which is conducive to improving long-distance detection performance.

In another possible implementation of the second aspect, N>1, N optical transmitter modules are arranged in an array, and differences of geometric center offsets between any two adjacent optical transmitter modules in one row of optical transmitter modules in the array are the same.

A geometric center offset of each of the N optical transmitter modules is an offset between a geometric center of M light sources in the optical transmitter module and a geometric center of a first metalens.

In the foregoing implementation, because the first metalens can process the light beam, when there is an offset between the geometric center of the M light sources and the geometric center of the first metalens, the light beam may be deflected, so that a pointing angle of the light beam is uniformly redirected outward, to implement pointing angle adjustment and control of the light beam.

In still another possible implementation of the second aspect, N>1, and geometric center offset directions of a plurality of optical transmitter modules in the N optical transmitter modules includes at least two offset directions. The geometric center offset direction of each of the plurality of optical transmitter modules is an offset direction of the geometric center that is of the M light sources in each optical reflection module and that is relative to the geometric center of the first metalens.

In the foregoing implementation, there is a misalignment between a center of the metalens and a center of the plurality of light sources, and there may be a plurality of misalignment manners. In this way, light beams emitted by the plurality of optical transmitter modules can be homogenized, an energy gap of the emitted light beams can be reduced, and uniformity of energy distribution is improved, thereby helping improve detection performance.

In addition, in the N light source transmitter modules, values of geometric center offsets of some optical transmitter modules may be greater than 0. Alternatively, a value of a geometric center offset of each of the N optical transmitter modules is greater than 0.

In still another possible implementation of the second aspect, N>1, N optical transmitter modules are arranged in an array, the N optical transmitter modules are included in L unit groups, each of the L unit groups includes K optical transmitter modules, and both K and L are integers greater than 0; and
geometric centers of optical transmitter modules in each unit group are offset in a same direction, and geometric centers of optical transmitter modules in two adjacent unit groups in the L unit groups are offset in different directions.

The foregoing implementation provides a manner of misalignment. The N optical transmitter modules are divided into a plurality of unit groups, and optical transmitter modules in each unit group have a same misalignment direction. Two groups of adjacent unit groups exist in the plurality of unit groups, and geometric center offset directions of optical transmitter modules are different.

In a possible implementation, the N optical transmitter modules are grid-based (that is, one unit group is one grid), each grid may include a plurality of optical transmitter modules, misalignment directions of optical transmitter modules in each grid are the same, and in a plurality of grids, one group of adjacent grids have different misalignment directions of optical transmitter modules. Further, optical transmitter modules in any two adjacent grids have different misalignment manners.

In still another possible implementation of the second aspect, N>1, the N optical transmitter modules are arranged in an array, the N optical transmitter modules are included in L unit groups, each of the L unit groups includes K optical transmitter modules, and both K and L are integers greater than 0.

The transmitting apparatus further includes L second metalens, the L second metalens are in a one-to-one correspondence with the L unit groups, and the L second metalens are configured to respectively adjust and control pointing angles of light beams emitted by the L unit groups.

The foregoing provides an implementation of adjusting and controlling the pointing angle. The N optical transmitter modules are divided into a plurality of unit groups, and the optical transmitter modules in each unit group have a same misalignment direction (namely, an offset direction of a geometric center). A second metalens is disposed outside the optical transmitter module, and the second metalens is configured to adjust and control pointing angles of light beams generated by one or more unit groups. In this way, the pointing angle of the light beam can be flexibly adjusted and controlled, which is conducive to improving detection quality.

In still another possible implementation of the second aspect, each of the L second metalens includes a substrate and a third micro-nano structure layer borne on the substrate, and the third micro-nano structure layer includes a plurality of third nano structure units. The pointing angle can be adjusted and controlled by using the metalens, to further improve device integration of the transmitting apparatus.

According to a third aspect, an embodiment of this application provides a detection apparatus, where the detection apparatus includes the transmitting apparatus according to any one of the second aspect and a detector. The transmitting apparatus is configured to propagate an emitted light beam to object space, and the detector is configured to receive a return light beam from the object space, where the return light beam includes an echo corresponding to the emitted light beam.

Further, the emitted light beam may be a second light beam, or the emitted light beam is a light beam formed by the second light beam by passing through another optical element.

According to a fourth aspect, an embodiment of this application provides a terminal. The terminal includes the optical transmitter module according to any one of the first aspect, or the terminal includes the transmitting apparatus according to any one of the second aspect, or the terminal includes the detection apparatus according to the third aspect.

In a possible implementation of the fourth aspect, the terminal is a vehicle, an uncrewed aerial vehicle, or a robot.

### BRIEF DESCRIPTION OF DRAWINGS

The following briefly describes accompanying drawings used in describing embodiments.
FIG. 1 is a diagram of an architecture of a detection apparatus according to an embodiment of this application;
FIG. 2 is a diagram of a structure of an optical transmitter module according to an embodiment of this application;
FIG. 3 is a diagram of a structure of a metalens according to an embodiment of this application;
FIG. 4 is a diagram of two nano structure units according to an embodiment of this application;
FIG. 5 is a diagram of a structure of still another first metalens according to an embodiment of this application;
FIG. 6 is a diagram of a structure of another first metalens according to an embodiment of this application;
FIG. 7 is a diagram of possible sizes of a surface and a light-emitting region of a metalens according to an embodiment of this application;
FIG. 8 is a diagram of an area of a light beam cross-section according to an embodiment of this application;
FIG. 9 is a diagram of a position between a light transmission surface and a first light beam according to an embodiment of this application;
FIG. 10 is a diagram of two geometric center offsets according to an embodiment of this application;
FIG. 11 is a diagram of distribution of light spots in angular space according to an embodiment of this application;
FIG. 12 is a diagram of several light source arrangement manners according to an embodiment of this application;
FIG. 13 is a diagram of a structure of a transmitting apparatus according to an embodiment of this application;
FIG. 14 is a top view of another transmitting apparatus according to an embodiment of this application;
FIG. 15 is a diagram of luminance of a light beam in angular space according to an embodiment of this application;
FIG. 16 is a diagram of a structure of a transmitting apparatus according to an embodiment of this application;
FIG. 17 is a diagram of luminance of another light beam in angular space according to an embodiment of this application;
FIG. 18 is a diagram of a plurality of optical transmitter modules included in a transmitting apparatus according to an embodiment of this application;
FIG. 19 is a diagram of luminance of still another light beam in angular space according to an embodiment of this application;
FIG. 20 is a diagram of an offset direction according to an embodiment of this application;
FIG. 21 is a diagram of an offset according to an embodiment of this application;
FIG. 22 is a diagram of luminance of still another light beam in angular space according to an embodiment of this application;
FIG. 23 is a top view of still another transmitting apparatus according to an embodiment of this application;
FIG. 24 is a top view of still another transmitting apparatus according to an embodiment of this application;
FIG. 25 is a diagram of pointing angle adjustment and control effect of an antenna structure of a metalens according to an embodiment of this application;
FIG. 26 is a diagram of still another possible pointing angle according to an embodiment of this application; and
FIG. 27 is a top view of still another transmitting apparatus according to an embodiment of this application.

### DESCRIPTION OF EMBODIMENTS

In recent years, an intelligent driving technology has become one of increasingly indispensable technologies in a vehicle driving process, and is also a key technology in vehicle intelligent development. In the intelligent driving technology, a sensing layer is referred to as "eyes" of a vehicle. The sensing layer includes a vehicle-mounted millimeter-wave radar, a vehicle-mounted lidar, a vehicle-mounted ultrasonic radar, and the like. The lidar has become one of indispensable sensors in the intelligent driving technology because of advantages of high resolution, good concealment, accurate ranging, and the like.

One of key development directions of the lidar is high integration and multi-channel emission. Because the lidar needs to emit and receive a light beam, processing on the light beam is usually performed by a geometric lens. However, a volume of the geometric lens is large, and consequently, it is difficult to reduce a volume of the lidar. Using an optical emission system of the lidar as an example. Currently, the optical emission system generally includes structures such as a light source, the geometric lens, and a lens tube. The light source is far away from the lens and is relatively independent. This makes the optical emission system large in size, and hinders miniaturization development of the lidar.

In view of this, embodiments of this application provide an optical transmitter module, a transmitting apparatus, a detection apparatus, and a terminal. According to embodiments of this application, energy density of a light spot formed by an emitted light beam can be improved, and device integration can be improved. It should be understood that the detection apparatus in this application may be a lidar, or may be another apparatus that needs to emit a light beam, for example, a fusion sensing device that integrates a laser detection function and a camera function.

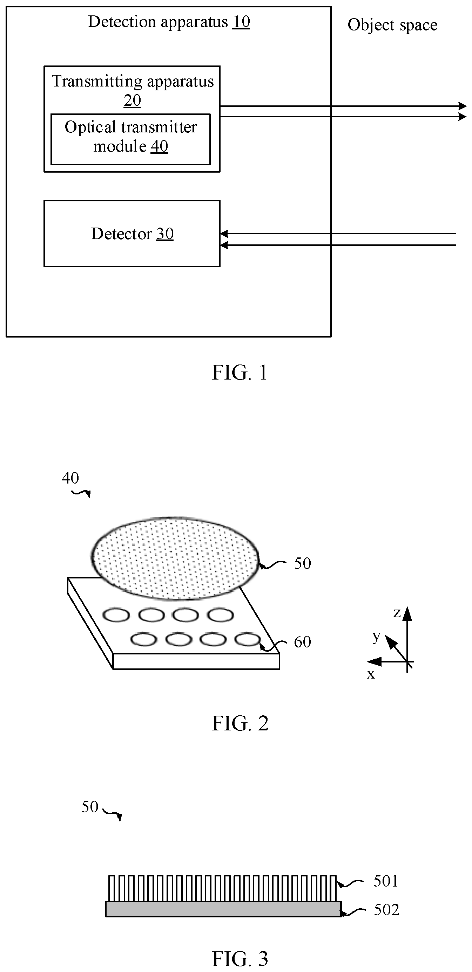

The following first describes a detection apparatus provided in embodiments of this application. FIG. 1 is a diagram of an architecture of a detection apparatus according to an embodiment of this application. A detection apparatus 10 includes a transmitting apparatus 20 and a detector 30. Solid lines with arrows indicate light propagation directions.

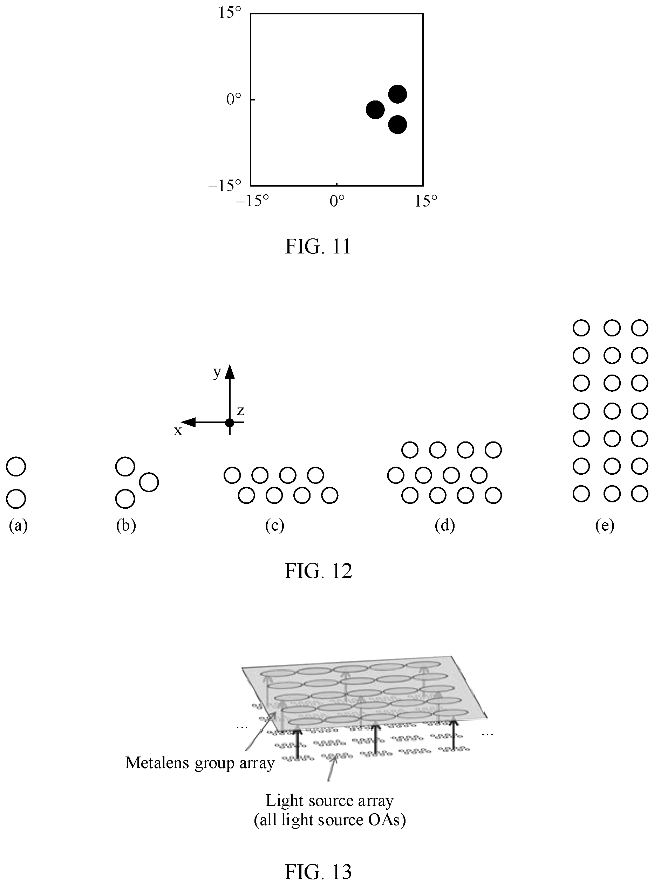

The transmitting apparatus 20 may generate an emitted light beam, and the emitted light beam may be one channel or a plurality of channels. The emitted light beam may be propagated to object space, and is used to detect a target in the object space. The transmitting apparatus 20 may include one or more optical transmitter modules 40. The optical transmitter module 40 includes a light source and a metalens. The light source is configured to emit a light beam, and the metalens is configured to process the light beam emitted by the light source. For example, the light source may be a laser. Further, the laser may be, for example, a vertical-plane emitting laser or an edge emitting laser (edge emitting laser, EEL). When the vertical-plane emitting laser is disposed on a circuit board, a light exit surface is a surface parallel to the circuit board. For example, the vertical-plane emitting laser includes but is not limited to one or more of a vertical-cavity surface-emitting laser (vertical-cavity surface-emitting laser, VCSEL), a photonic crystal surface emitting laser (photonic crystal surface emitting semiconductor laser, PCSEL), a horizontal cavity surface emitting laser (Horizontal Cavity Surface-Emitting Laser, HCSEL), an optical fiber laser, and the like. The edge emitting laser is a laser that emits light through a side surface. In other words, the edge emitting laser is a laser that is disposed on a circuit board and whose light exit surface is a side surface (or is perpendicular to a surface of the circuit board). Optionally, the EEL may alternatively be replaced with another apparatus that emits light at an edge of a light-emitting element, for example, a silicon photonic chip. Further, some possible implementations of the transmitting apparatus 20 are described below. For example, the transmitting apparatus 20 may be a transmitting apparatus shown in an embodiment in FIG. 13, FIG. 14, FIG. 16, FIG. 18, FIG. 23, FIG. 24, or FIG. 27.

The detector 30 is configured to receive a light beam from the object space. In most scenarios, the light beam from the object space includes an echo of the light beam emitted by the transmitting apparatus, and information about a target in the object space, for example, one or more of a distance, a location, an angle, a color, a reflectivity, or a speed of the target, may be determined based on the echo. The detector 30 may include one or more detection elements, for example, one or more of a single-photon avalanche diode (single-photon avalanche diode, SPAD), a silicon photomultiplier (Silicon photomultiplier, SiPM), an avalanche photodiode (avalanche photodiode detector, APD), a multi-pixel photon counter (multi-pixel photon counter, MPPC), or an electron multiplying charge-coupled device (electron multiplying charge-coupled device, EMCCD). Optionally, when the detector 30 includes a plurality of detection elements, the plurality of detection elements may be arranged in an array. In this case, the detector 30 may be referred to as an array detector.

The following describes the optical transmitter module provided in embodiments of this application. Optionally, the optical transmitter module may be included in the transmitting apparatus in FIG. 1.

FIG. 2 is a diagram of a structure of an optical transmitter module according to an embodiment of this application. The optical transmitter module 40 includes a plurality of light sources 60 (each light source is represented by a circular region) and a first metalens 50. For ease of description, a quantity of light sources included in the optical transmitter module 40 is represented as M, where M is an integer greater than 1.

The light source 60 is configured to generate a light beam. For ease of distinguishing, light beams generated by the M light sources 60 are referred to as first light beams herein. The light source 60 may be a VCSEL, a PCSEL, an EEL, or the like. Optionally, one light source 60 is one optical aperture (optical aperture, OA). For example, a VCSEL is used as an example. One light source (namely, one OA) may be one VCSEL light-emitting diode. Because the optical transmitter module 40 includes a plurality of light sources, the plurality of light sources may be arranged and designed. This helps flexibly adjust light spot distribution in angle space. For example, the plurality of light sources shown in FIG. 2 may be arranged in a plurality of rows and interleaved and staggered between rows, so that a gap between light sources can be reduced, and a gap between formed light spots can be reduced. In this way, the light spots are more evenly distributed in the angular space. In addition, there is a larger range for adjusting and controlling light field of light beams emitted by the plurality of light sources. Further, the plurality of light sources may be packaged to form a three-dimensional plate-like structure. As shown in FIG. 2, the plurality of light sources are integrated into a substrate to form a light source array. Certainly, materials of the substrate in which the light sources are located and a substrate in a subsequent metalens are usually different.

The first metalens 50 is configured to process the first light beam to obtain a second light beam. The processing herein includes performing light field adjustment and control on the first light beam. A light field is a set of light rays in space, and includes a position and an angle of the light ray in space. The light field adjustment and control is adjustment and control of a light field of a light beam. The light field adjustment and control may include one or more of the following processing: convergence, collimation, divergence, splitting, reflection, refraction, homogenization, or light filtering, or may further include adjustment of one or more attributes of a light beam, such as pointing angle, divergence angle, phase, resonance, polarization, and dispersion. Some processing effect is described below as an example.

The first metalens 50 may specifically include one or more metalens. The metalens includes nano structure units arranged in a specific manner, and an overall volume is small. FIG. 3 is a diagram of a structure of a metalens according to an embodiment of this application. The metalens includes a substrate 501 and a first micro-nano structure layer 502 borne on the substrate 501, and the first micro-nano structure layer includes a plurality of first nano structure units. The substrate 501 is configured to bear the micro-nano structure layer, and is generally made of a transparent material, for example, glass or crystal. In some scenarios, the substrate is a high-transmittance material, to reduce an energy loss of a light beam. For example, a transmittance of the high-transmittance material is greater than a first threshold. The first threshold may be predefined (for example, specified in the industry) or preset. For example, the high-transmittance material may be a material whose transmittance is greater than 99%, or the high-transmittance material may be a material whose transmittance is greater than 90%.

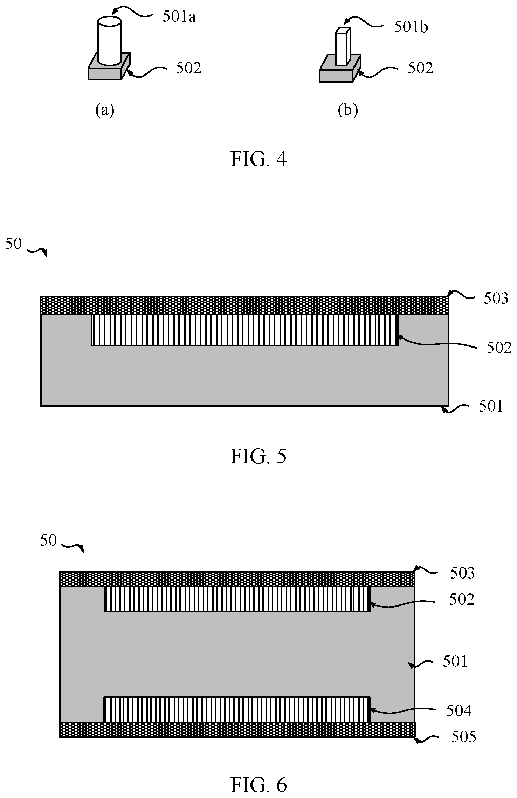

FIG. 4 is a diagram of two nano structure units according to an embodiment of this application. A first nano structure unit may be a nano cylinder 501a shown in (a) in FIG. 4, or a nano prism 501b shown in (b) in FIG. 4, or the like. Certainly, in a specific implementation process, the nano structure unit may be designed in another shape to meet a requirement for light beam processing effect. Further, the nano structure units may be arranged on the substrate based on a preset phase.

In conclusion, in the optical transmitter module 40 shown in FIG. 2, the first metalens 50 and several light sources 60 form a "one-to-many" structure. The first light beams formed by the plurality of light sources are processed by the first metalens to form a second light beam, and the second light beam may be used for a plurality of functions, such as ranging, and surveying and mapping. For example, the optical transmitter module 40 may be included in the transmitting apparatus 20 of the detection apparatus 10 shown in FIG. 1.

In a possible case, if the optical transmitter module includes only a single light source, energy of a light beam emitted by the light source is high at a part close to a center of the light beam, and energy of the light beam is low at an edge part of the light beam. When the light beam of the single light source is not collimated, a large divergence angle of the light source results in a decrease in density of energy propagated to space, and detection effect is poor. If the light beam of the single light source is collimated, uniformity of energy distribution of light spots is reduced. In addition, there is a small range for performing light field adjustment and control on the light beam generated by the single light source. Especially, designs such as collimation, pointing angle adjustment and control, homogenization effect, and light spot interleaving arrangement are difficult to meet user requirements.

However, according to this embodiment of this application, on one hand, power of the light beams emitted by a plurality of light sources is superposition of power of all of the plurality of light sources, and energy density of the emitted light beam is high. In addition, the plurality of light sources are arranged to form a light-emitting region, so that energy distribution of the emitted light beam is more uniform. For example, the light beams emitted by the plurality of light sources may form a plurality of regions with high energy (referred to as high-energy regions for short) in the light beams. In an overall light spot formed by the light beams emitted by the plurality of light sources, light spots corresponding to the plurality of high-energy regions are arranged in an array, so that an area of the overall light spot is increased and energy distribution in the overall light spot is more uniform. In addition, a design of the plurality of light sources can also reduce difficulty of light field adjustment and control on the light beam. In particular, in processes such as collimating, homogenizing, adjusting and controlling a pointing angle of the light beam, the light beams formed by the plurality of light sources can achieve better light field adjustment and control effect. The first light beams emitted by the plurality of light sources may be collimated by the first metalens, to form the second light beam with more concentrated power density and uniform energy distribution in light spots of the second light beam. In a far-field detection (for example, 100 meters or more) scenario, the second light beam can still maintain large power and uniform light spots at a long distance, thereby significantly improving detection effect.

On the other hand, the metalens is used to process the light beam emitted by the light source, so that an overall volume of the transmitting apparatus can be significantly reduced while achieving light field adjustment and control and improving device integration. Using the optical transmitter module in the detection apparatus facilitates miniaturization of the detection apparatus.

It should be noted that XYZ coordinate axes shown in FIG. 1 are used to facilitate subsequent introduction of the optical transmitter module from a plurality of perspectives. A design of an X axis, a Y axis, and a Z axis is an example, and is not intended to limit a specific implementation.

The following describes a structural design of the first metalens. It should be understood that the following describes a plurality of possible designs, and the plurality of possible designs may be combined.

In a possible design, the first metalens may further include a protective layer. FIG. 5 is a diagram of a structure of still another first metalens according to an embodiment of this application. A first metalens 50 includes a substrate 501, a first micro-nano structure layer 502, and a first protective layer 503. The substrate 501 has a groove, the first protective layer 503 covers the groove of the substrate 501 to form a cavity, and the first micro-nano structure layer 502 is accommodated in the cavity. On one hand, the cavity structure can improve reliability of the micro-nano structure layer, and can help ensure quality of the emitted light beam. On the other hand, the cavity structure can ensure an effective refractive index of the micro-nano structure, and can help reduce processing difficulty.

Optionally, one end of each of one or more first nano structure units in the first micro-nano structure layer is connected to the substrate 501, and another end is in contact with the first protective layer 503. In other words, two ends of the nano structure unit are respectively in contact with the substrate and the protective layer, so that stability can be further improved.

In still another possible design, the first metalens may include a plurality of micro-nano structure layers. The plurality of micro-nano structure layers are used to jointly process the light beam, to improve light beam processing effect and implement more complex and accurate light field adjustment and control effect. Further, optionally, the plurality of micro-nano structure layers may be a multi-layer structure (namely, a front-and-rear group arrangement relationship), and for example, jointly process a first light beam. For example, the first metalens may include a plurality of layers of structures shown in FIG. 3 or FIG. 5. Optionally, when the first metalens includes the plurality of micro-nano structure layers, the plurality of micro-nano structure layers may have a same light field adjustment and control function, or may have different light field adjustment and control functions. For example, the first micro-nano structure layer and a second micro-nano structure layer may be jointly used for light beam collimation.

As an example of the plurality of micro-nano structure layer, the first metalens may include the first micro-nano structure layer and the second micro-nano structure layer. For the first micro-nano structure layer, refer to the foregoing description. The second micro-nano structure layer includes a plurality of second nano structure units. The second nano structure unit is also a structure whose volume (or length, height, width, or the like) is at a nano level, for example, a nano prism or a nano cylinder. A specific shape of the second nano structure unit may be designed based on an actual requirement. Optionally, the first nano structure unit and the second nano structure unit may have a same shape or different shapes. Similarly, the second nano structure units may also be arranged based on a preset phase. Optionally, in an arrangement manner, a phase of the first nano structure unit may be different from a phase of the second nano structure.

Further, the second micro-nano structure layer may also be borne on the substrate. For example, the second micro-nano structure layer and the first micro-nano structure layer may be located on a same substrate.

For example, the first micro-nano structure layer and the second micro-nano structure layer are located on two opposite surfaces of the substrate. In this way, a size of the optical transmitter module can be further reduced. FIG. 6 is a diagram of a structure of still another first metalens according to an embodiment of this application. The first metalens 50 includes a substrate 501, a first micro-nano structure layer 502, a second micro-nano structure layer 504, a first protective layer 503, and a second protective layer 505. The substrate 501 has two opposite grooves, and a cavity is formed between each of the two grooves and the two protective layers. The first micro-nano structure layer and the second micro-nano structure layer are respectively disposed in the two cavities. Certainly, the structure with the protective layer shown in FIG. 5 is used as an example herein, and a plurality of micro-nano structure layers without a protective layer and a cavity are also applicable.

For another example, the second micro-nano structure layer and the first micro-nano structure layer may be located on different substrates. This design can reduce production difficulty and reduce costs. For example, the first metalens may have a plurality of structures similar to that shown in FIG. 5 or FIG. 6.

The following describes a size design of the first metalens.

In a possible design, a cross-sectional area of a light transmission surface of the first metalens is greater than an area of a light-emitting region, and the light-emitting region is a region formed by light-emitting surfaces of the M light sources. The light transmission surface of the metalens is a surface through which the first light beam passes on the metalens. Further, the light transmission surface herein is a light transmission surface close to the first light beam. Optionally, with reference to FIG. 3 and FIG. 5, the light transmission surface of the first metalens may include a laying area of the first micro-nano structure layer. For another example, with reference to FIG. 6, the light transmission surface of the first metalens may include an overlapping area of the laying area of the first micro-nano structure layer and a laying area of the second micro-nano structure layer. The light-emitting region is a region formed by light-emitting surfaces surrounding the M light sources. For example, the M light sources are M VCSEL light-emitting diodes, and light-emitting surfaces of the VCSEL light-emitting diodes are cross-sections of light exit apertures. For example, the light-emitting region includes the light-emitting surfaces of the M light sources, and further includes a gap between two adjacent light sources.

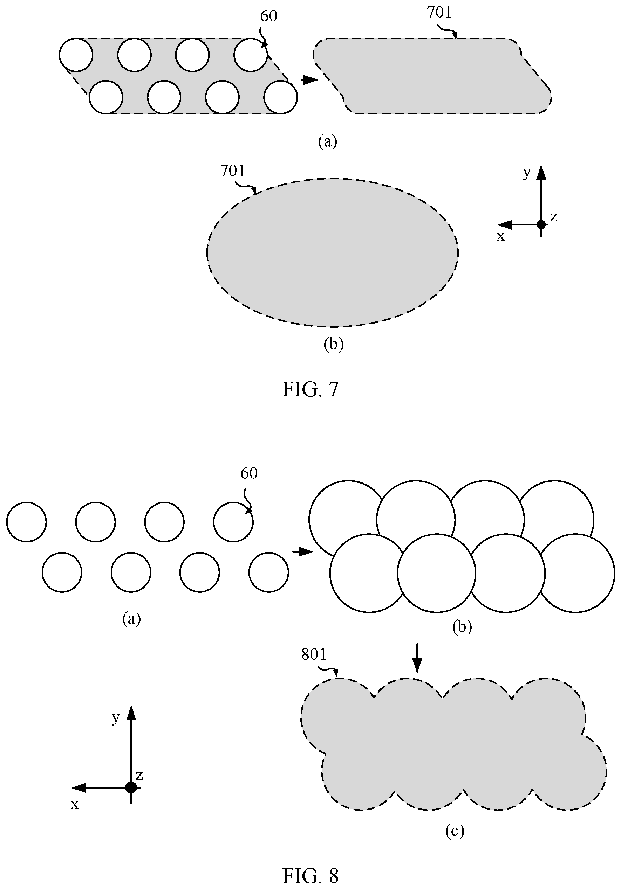

FIG. 7 is a diagram of possible sizes of a surface and a light-emitting region of a first metalens according to an embodiment of this application. As shown in (a) in FIG. 7, a region 701 is an area formed by light-emitting surfaces of the M light sources 60, and the region 701 includes a region of a light exit hole of the light source and a gap between two light sources. As shown in (b) in FIG. 7, a region 702 is an area of a light transmission surface of the metalens, and an area of the region 702 is greater than the area of the region 701. With reference to the optical transmitter module shown in FIG. 2, a light beam is propagated in a direction of an X-Y plane, and an area shown in FIG. 7 is an area in a view of the X-Y plane if refraction of an optical path is not considered.

In another possible design, an area of light beam cross-sections of the first light beams emitted by the M light sources on the metalens is less than the area of the light transmission surface of the metalens. In other words, all light beams emitted by the M light sources are included in the metalens. FIG. 8 is a diagram of an area of a light beam cross-section according to an embodiment of this application. In (a) shown in FIG. 8, there are light-emitting surfaces of the M light sources 60. Because there may be a specific distance between the metalens and each of the plurality of light sources, when light beams emitted by the M light sources reach a light transmission surface of the metalens, a light beam cross-section may be shown in (b) in FIG. 8, and an area of the light beam cross-section is shown in (c) in FIG. 8, for example, may be represented as a region 801. An area of the region 801 may be greater than the area of the region 702. In this way, all first light beams emitted by the M light sources may pass through a metalens in the first metalens, and are subjected to light field adjustment and control as a whole. It should be understood that the light beam cross-section shown in FIG. 7 is merely an example. In a specific implementation process, the light beam cross-section corresponding to each light source may be larger or smaller, and details are not described herein again.

Optionally, the light transmission surface herein may be a light transmission surface close to the M light sources. Further, after being emitted from the M light sources, and before passing through the metalens, the first light beams may be converged.

In a possible implementation, the first light beam may be incident on a central part of the metalens, to avoid being close to an edge part of the first metalens. In this way, distortion of the light beam is avoided at an edge part, light beam shaping quality is ensured, and usability of the light beam generated by the optical transmitter module is improved.

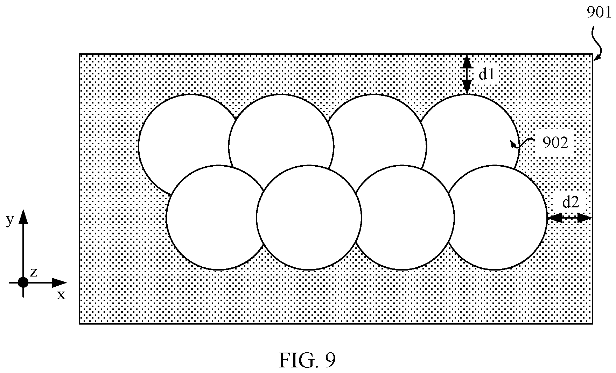

For example, the first light beams emitted by the M light sources are incident on the light transmission surface of the metalens, a minimum distance between the first light beam passing through the metalens and an edge of the light transmission surface of the metalens is greater than a first threshold, and the first threshold is greater than 0. FIG. 9 is a diagram of a position between a light transmission surface and a first light beam according to an embodiment of this application. A light transmission surface of a metalens in a first metalens is shown in a region 901, and a cross-section of the first light beam on the light transmission surface is shown in a region 902. It can be learned that when the first light beam is incident on the light transmission surface, the light beam is close to a central part of the light transmission surface. A minimum distance between the first light beam and the light transmission surface is denoted as d1, where d1 is greater than 0. In other words, the first light beam may not be close to an edge of the metalens. Further, d1 may be greater than a preset first threshold. For example, the first threshold may be 5 nanometers, 10 micrometers, or the like.

Optionally, the foregoing implementation is applied to a case in which an emitted light beam has a large field of view. For example, the field of view is greater than a first angle threshold. For example, the first angle threshold is greater than 60°, or the first angle threshold is greater than 120°. The field of view may be an included angle between two edges of a maximum range in which a light beam can pass through a lens (or a camera lens). A larger field of view indicates a larger vision.

Further, a pointing angle of the first light beam needs to be adjusted and controlled in a first direction. In this case, the minimum distance between the first light beam passing through the metalens and the edge of the light transmission surface of the metalens may be replaced with a minimum distance between the first light beam and the edge of the light transmission surface of the metalens in the first direction. FIG. 9 is still used as an example. If the first light source needs to adjust the pointing angle in an x-axis direction, a minimum distance between the first light beam and the edge of the light transmission surface of the metalens in the x-axis direction may be represented as d2, where d2 is greater than 0. In other words, the first light beam needs to avoid being close to the edge of the metalens in a direction in which pointing angle adjustment and control is performed. Further, d2 may be greater than a preset second threshold. For example, the second threshold may be 5 nanometers, 10 micrometers, or the like.

Certainly, when the direction in which the pointing angle adjustment and control is performed is inconsistent with a row arrangement direction or a column arrangement direction of the M light sources, the direction in which the pointing angle adjustment and control is performed may be decomposed into a plurality of sub-directions. In this case, there is a specific distance between the first light beam and the edge of the metalens in each of the plurality of sub-directions.

As mentioned above, the first metalens is configured to process the first light beams from the M light sources to obtain the second light beam, and processing of the light beam by the first light source includes light field adjustment and control on the first light beam. A light field is a set of light rays in space, and includes a position and an angle of the light ray in space. The light field adjustment and control is adjustment and control of a light field of a light beam. The light field adjustment and control may include one or more of the following processing: convergence, collimation, divergence, splitting, reflection, refraction, homogenization, or light filtering, or may further include adjustment of one or more attributes of a light beam, such as pointing angle, divergence angle, phase, resonance, polarization, and dispersion.

The following describes processing of the first light beam by the first metalens by using an example.

In a possible design, the first metalens is configured to collimate the first light beam. Further, the second light beam forms M spots in angular space, and arrangement of the M spots is centrosymmetric with respect to arrangement of the M light sources in an optical transmitter unit.

In a possible design, a pointing angle of the second light beam is different from the pointing angle of the first light beam.

It should be understood that the first metalens may simultaneously perform a plurality of different types of light field adjustment and control on the light beam. For example, the first metalens is configured to collimate the first light beam and adjust and control a pointing angle to obtain the second light beam, so that the second light beam is propagated to a specified pointing angle while energy density of the light beam is improved. In this way, the second light beam can be used for accurate detection in a region and has good ranging effect.

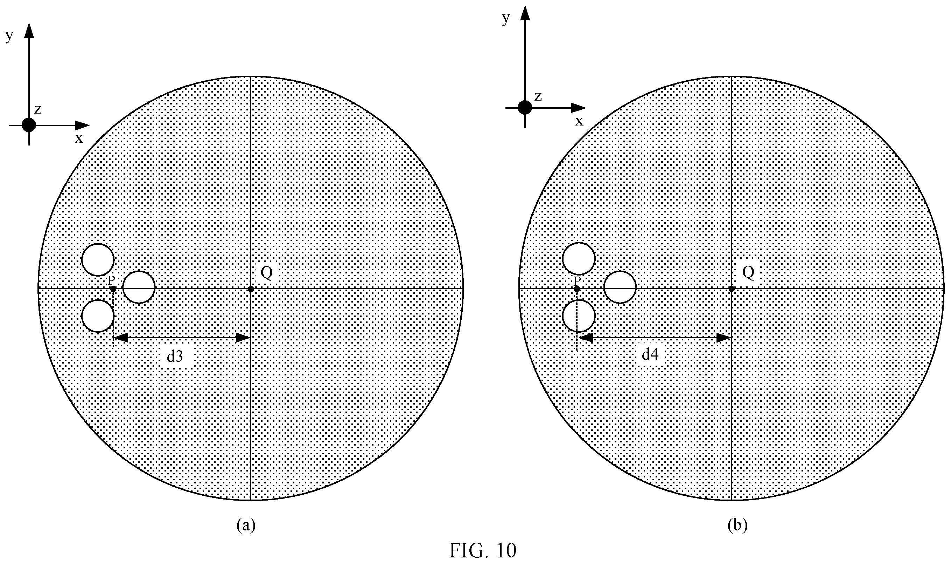

In a possible design, the pointing angle adjustment and control may be implemented through a position offset between a geometric center of the light source and a geometric center of the first metalens. In other words, there is an offset between the geometric center of the M light sources and the geometric center of the first metalens. FIG. 10 is a diagram of two geometric center offsets according to an embodiment of this application. In (a) in FIG. 10, a geometric center of the M light sources may be a point P, the point P is a central symmetry point of the M light sources, a point Q is a geometric center of the first metalens, and a distance between P and Q is an offset between the geometric center of the M light sources and the geometric center of the first metalens, for example, may be represented as d3. Optionally, d3≥0.

In (b) in FIG. 10, a point P is located on a symmetry axis of the M light sources, or is located at a midpoint of a first column of optical elements, and a point Q is the geometric center of the first metalens. A distance between P and Q is an offset between the geometric center of the M light sources and the geometric center of the first metalens, for example, may be represented as d4. Optionally, d4≥0.

Optionally, an offset of a geometric center of an optical transmitter module may be specifically an offset along a main optical axis of a light beam, namely, an offset on an XY plane in FIG. 10. In this case, light beams emitted by the M light sources are propagated in a direction passing through the XY plane (for example, a Z-axis direction, namely, a direction perpendicular to the XY plane).

FIG. 11 is a diagram of distribution of light spots in angular space according to an embodiment of this application. It can be learned that, a geometric center of a light source is misplaced from a geometric center of a light beam unit, so that there is an offset between a main optical axis of a light beam emitted by the light source and a main optical axis of a first metalens. After collimation of the first metalens, light spots are located on a right side of the angular space. To be specific, a second light beam may point to different angles after passing through the first metalens.

In some other possible designs, the transmitting apparatus includes a plurality of optical transmitter modules, and the plurality of optical transmitter modules have different offset directions, distances, and the like (described below), so that light beams transmitted by the plurality of optical transmitter modules present uniformity effect in the angular space.

It should be noted that the geometric center of the M light sources may be predefined or pre-designed. For example, the geometric center of the M light sources may be an intersection point of a horizontal center and a vertical center of the M light sources. Alternatively, when the M light sources form a symmetric structure, the geometric center may be located at a symmetric point or a symmetric axis.

The following describes possible arrangement of the M light sources.

FIG. 12 is a diagram of several light source arrangement manners according to an embodiment of this application. As shown in (a) in FIG. 12, a quantity of light sources may be two, and the two light sources may be arranged in one column in a direction, for example, in a y-axis direction. As shown in (b) in FIG. 12, the quantity of light sources may be three, the three light sources may form a plurality of columns, and the plurality of columns are arranged in an interleaved manner. From the y-axis direction, a center of the light source in a second column is located in a gap of the light sources in a first column. Certainly, there may be more light sources, to form an array. A plurality of rows or columns of light sources arranged in the array are arranged in an interleaved manner. As shown in (c) in FIG. 12, the quantity of light sources may be 8, two rows of the light sources are arranged in an interleaved manner, and each row includes four light sources. As shown in (d) in FIG. 12, the quantity of light sources may be 12, three rows of the light sources are arranged in an interleaved manner, and each row includes four light sources. As shown in (e) in FIG. 12, the quantity of light sources may be 21, three columns of the light sources are arranged, and each column includes seven light sources.

The following describes a transmitting apparatus provided in embodiments of this application.

An embodiment of this application provides a transmitting apparatus. The transmitting apparatus includes one or more optical transmitter modules, for example, the optical transmitter module shown in FIG. 2, and the optical transmitter module described in a possible design of the optical transmitter module. For ease of description, a quantity of optical transmitter modules included in the transmitting apparatus is represented as N below, where N is an integer greater than 0.

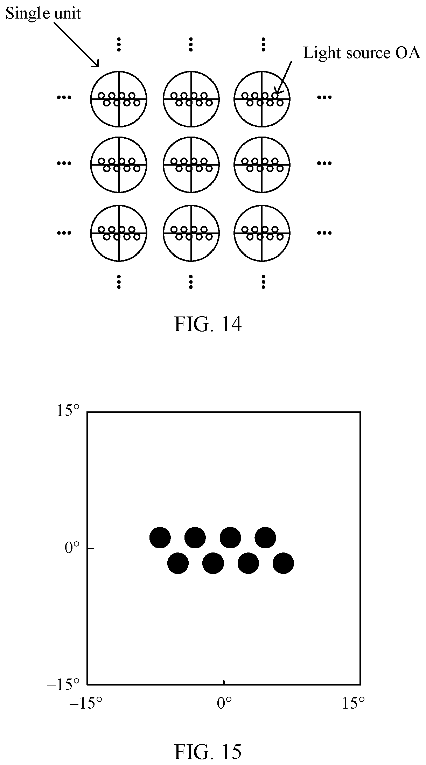

FIG. 13 is a diagram of a structure of a transmitting apparatus according to an embodiment of this application. The transmitter module includes a plurality of optical transmitter modules. The optical transmitter module is a metalens group (which may be considered as a first metalens) and the metalens group and several light sources form a "one-to-many" structure. Light sources in the plurality of optical transmitter modules are arranged in an array, to form a light source array. Metalenses in the plurality of optical transmitter modules are arranged in an array, to form a metalens array. Optionally, in each optical transmitter module, an area of the metalens group is greater than an area of a light-emitting region formed by several light sources. FIG. 14 is a top view of still another transmitting apparatus according to an embodiment of this application. A single unit is a single optical transmitter module, and a light source OA is a light source. In a single unit, a cross-sectional area of the metalens group is greater than an area of a light-emitting region formed by eight light sources OAs.

Optionally, one metalens group is configured to collimate and shape light beams emitted by several light sources corresponding to the metalens group. After the collimation and shaping performed by the metalens group, a plurality of light spots are presented by the several light sources in far-field angular space. FIG. 15 is a diagram of brightness of a light beam in angular space according to an embodiment of this application. It can be learned that light spot arrangement is centrosymmetric with respect to arrangement of several light sources in an optical transmitter module. In this way, the light beam is processed by the metalens, thereby greatly reducing a volume of the transmitting apparatus and improving device integration. In addition, the metalens group and the several light sources form a "one-to-many" structure, and can adjust and control an optical field of light beams emitted by the plurality of light sources, thereby greatly reducing difficulty of light beam shaping and improving operability of optical field adjustment and control.

In a possible implementation, the transmitting apparatus may further include an optical lens group. An optical lens is configured to process light beams generated by one or more optical transmitter modules in an optical apparatus, including but not limited to optical shaping, for example, one or more of convergence, divergence, collimation, homogenization, refraction, filtering, or light splitting. For example, the optical lens group may include one or more lenses. For example, the optical lens group may include one lens, and the lens may be configured to process light beams generated by the N optical transmitter modules. Alternatively, when N>1, the optical lens group may be configured to process light beams generated by a part of the N optical transmitter modules. For another example, the optical lens group may include a plurality of lenses, and the plurality of lenses may include a plurality of lenses arranged in front and rear or may include a lens array. For example, the lens array may include N lenses, and each lens is configured to process a light beam generated by one optical transmitter module.

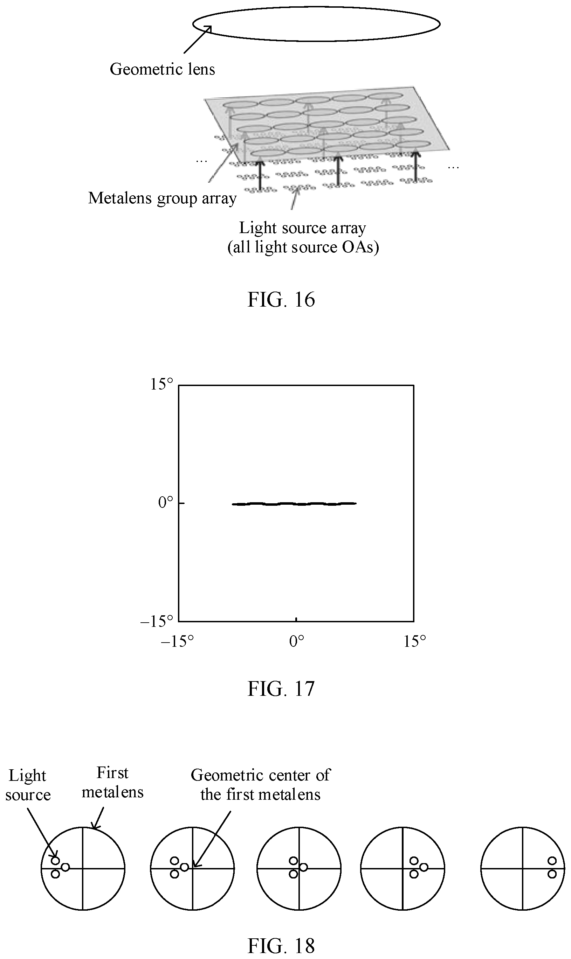

FIG. 16 is a diagram of a structure of a transmitting apparatus according to an embodiment of this application. The transmitting apparatus includes a light source array, a metalens group array, and a geometric lens. One metalens group and several light sources are included in one optical transmitter module. Light beams emitted by the light source array are collimated and shaped by a metalens group, and then shaped by the geometric lens. FIG. 17 is another diagram of brightness of a light beam in angular space according to an embodiment of this application. Energy of light spots of light beams is distributed in the angular space from a discrete point type to a continuous line type, and energy density of the light spots is high, and energy distribution in line-shaped light spots is uniform.

Optionally, when the transmitter module includes a plurality of optical transmitter modules (that is, N>1), the plurality of optical transmitter modules may include a same quantity of light sources or different quantities of light sources.

In a possible implementation, N (N>1) optical transmitter modules in the transmitting apparatus are arranged in an array, and differences of geometric center offsets between any two adjacent optical transmitter modules in one row of optical transmitter modules in the array are the same. The geometric center offset is an offset (offset for short) between the geometric center of the M light sources in the optical transmitter module and the geometric center of the first metalens.

FIG. 18 is a diagram of a plurality of optical transmitter modules included in a transmitting apparatus according to an embodiment of this application. Five optical transmitter modules shown in FIG. 18 are included in the transmitting apparatus, and belong to one row or some optical transmitter modules in one row of the transmitting apparatus. In FIG. 18, there is an offset (referred to as a geometric center offset) between a light source in each optical transmitter module and a geometric center of a first metalens, and geometric center offsets of the plurality of optical transmitter modules have a rule. A possible rule is as follows: Compared with the geometric center of the first metalens in each optical transmitter module, the geometric center of the light source in each optical transmitter module gradually changes in a direction (for example, a right side shown in FIG. 18) from a first optical transmitter module. Further, step sizes changed each time may be the same, that is, differences of geometric center offsets between adjacent optical transmitter modules are the same. Certainly, the same herein does not mean absolute same, and an error caused by a manufacturing process, a measurement error, and the like need to be considered.

In a possible implementation, the light beam may be directed to different angles by offsetting the geometric center of the light source from the geometric center of the first metalens. In this way, relative positions of the light source OA and the geometric center of the metalens can be adjusted, to adjust and control the pointing angle while implementing collimation.

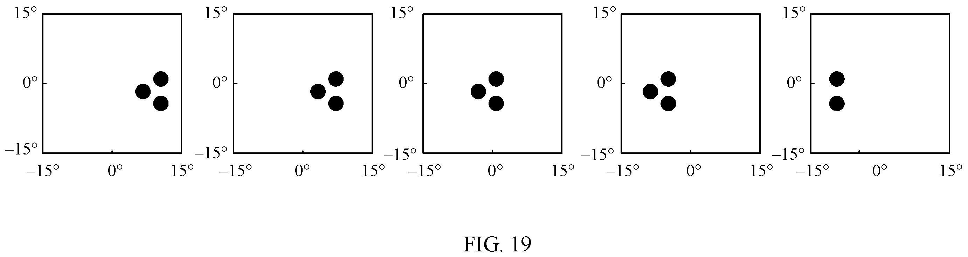

FIG. 19 is still another diagram of luminance of a light beam in angular space according to an embodiment of this application. FIG. 19 shows energy distribution of light spots formed by a plurality of optical transmitter modules shown in FIG. 18 in the angular space. With reference to FIG. 18, a light beam of the first optical transmitter module is directed to an angle range of 5.5° to 11.9°, and a light beam of the second optical transmitter module is directed to an angle range of 0.5° to 6.9°. Similarly, a third to a fifth optical transmitter modules are respectively directed to an angle range of 1.9° to -4.3°, an angle range of -2.9° to -7.4°, and an angle range of -7.9° to - 11.9°. It can be learned that, in the embodiment shown in FIG. 19, a metalens simultaneously implements light source collimation and pointing angle adjustment and control. In addition, the pointing angle can be flexibly adjusted and controlled, so that when a user needs a light beam with a different pointing angle, arrangement of the light source does not need to be limited. In conclusion, embodiments of this application effectively improve an optical adjustment and control capability at a microscopic scale.

In addition, in FIG. 18, light sources in adjacent optical transmitter modules are arranged in an interleaved manner. For example, there is a misplacement between a center of one light source OA (referred to as OA 1 for ease of description) in a second column in the first optical transmitter module and centers of two light sources OA (referred to as OA 2 and OA 3 for ease of description) in a first column in a second optical transmitter module. That is, in a horizontal direction, a center of OA 1 is located in a gap between OA 2 and OA 3. With reference to FIG. 18 and FIG. 19, ranges of the pointing angles of the light beams emitted by the adjacent optical transmitter modules also overlap. In this way, light spots of the emitted light beams can be densely arranged through interleaved arrangement of the light sources and overlapping of the ranges of the pointing angles, to further fill an energy distribution gap of the light spots formed by the light sources, and improve detection performance.

In a possible implementation, directions of geometric center offsets of a plurality of optical transmitter modules in the N (N>1) optical transmitter modules in the transmitting apparatus include at least two offset directions. The direction of the geometric center offset is an offset direction that is of the geometric center of the M light sources in the optical reflection module and that is relative to the geometric center of the first metalens. In other words, there is a misalignment between a center of the first metalens and a center of the plurality of light sources, and there may be a plurality of misalignment manners. In this way, light beams emitted by the plurality of optical transmitter modules can be homogenized, and an energy gap of the emitted light beams can be reduced.

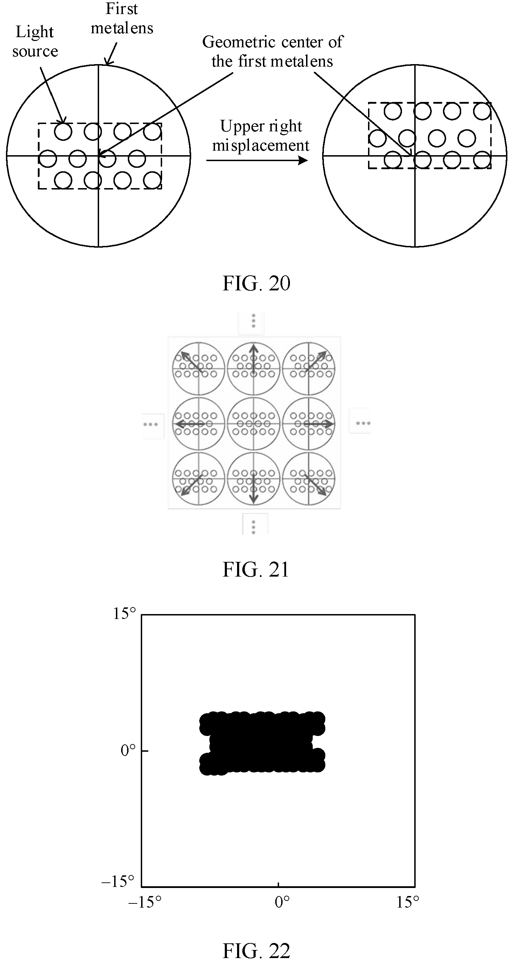

FIG. 20 is a diagram of an offset direction according to an embodiment of this application. The offset may also be referred to as a misalignment. When no misalignment is performed, a geometric center of light sources in a single unit overlaps a geometric center of a metalens. When the geometric center of the light sources is offset to an upper right corner relative to a geometric center of a first metalens, that is, when the offset direction is upper right, an "upper right misalignment" design is formed. For example, the offset direction includes but is not limited to an up direction, a down direction, a left direction, a right direction, an upper left direction, an upper right direction, a lower left direction, or a lower right direction. Further, an offset distance (namely, an offset value) may be less than a distance between a center of the metalens and an edge in a corresponding direction.

In a possible implementation, offset directions between two adjacent optical transmitter modules are different. Further, for a plurality of optical transmitter modules arranged in an array, offset directions between adjacent optical transmitter modules in a row direction and a column direction are different. FIG. 21 is a diagram of an offset according to an embodiment of this application. A transmitting apparatus may include nine optical transmitter modules in a 3*3 matrix. Any two of the nine optical transmitter modules differ in either presence of an offset or an offset direction. For example, the optical transmitter module in the middle is not offset, and the other eight optical transmitter modules are offset, and offset directions are different. FIG. 22 is a diagram of brightness of a light beam in angular space according to an embodiment of this application. A transmitting apparatus includes units in different misalignment manners. This can achieve effect of uniform distribution of light spots in the angular space.

In another possible implementation, N optical transmitter modules are arranged in an array, the N optical transmitter modules are included in L unit groups, each of the L unit groups includes K optical transmitter modules, and both K and L are integers greater than 0. Geometric centers of optical transmitter modules in each unit group are offset in a same direction, and geometric centers of optical transmitter modules in two adjacent unit groups in the L unit groups are offset in different directions.

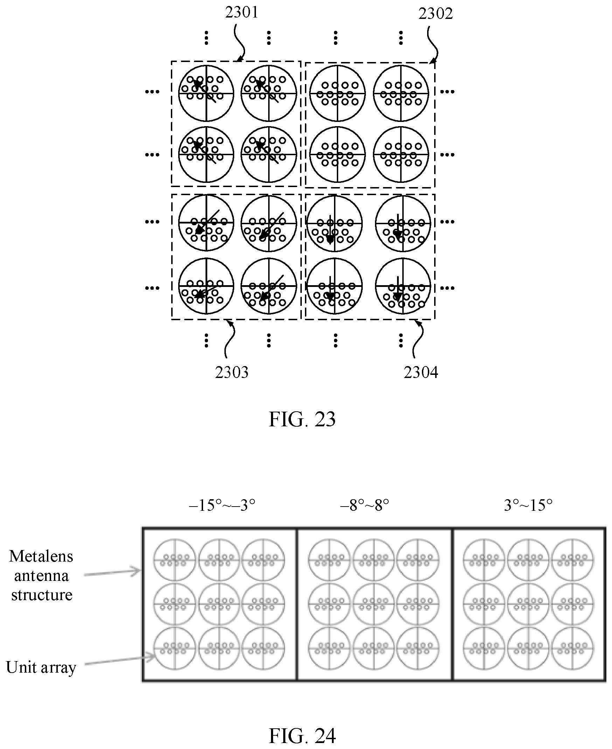

FIG. 23 is a top view of another transmitting apparatus according to an embodiment of this application. The transmitting apparatus may include 16 optical transmitter modules in a 4*4 matrix. The 16 optical transmitter modules may belong to four different unit groups, respectively represented as a unit group 1, a unit group 2, a unit group 3, and a unit group 4. The unit group 1 includes four optical transmitter modules shown in a region 2301, the unit group 2 includes four optical transmitter modules shown in a region 2302, the unit group 3 includes four optical transmitter modules shown in a region 2303, and the unit group 4 includes four optical transmitter modules shown in a region 2304. Offset directions of the optical transmitter modules in the unit group 1 are all upper left. None of the optical transmitter modules in the unit group 2 is offset, or it is considered that an offset direction of the optical transmitter modules is a zero direction (that is, geometric centers of the two optical transmitter modules are overlapped, and a value of a geometric center offset is zero), and the zero direction is different from any other offset direction. Similarly, offset directions of the optical transmitter modules in the unit group 3 are lower left, and offset directions of the optical transmitter modules in the unit group 4 are lower left. In FIG. 23, the unit group 1 is adjacent to the unit group 3, and offset directions of the unit group 1 and the unit group 3 are different.

Further, offset directions of any two adjacent unit groups in the L unit groups are different, as shown in FIG. 23.

Optionally, each of the L unit groups may include different quantities of optical transmitter modules. For example, in FIG. 23, the unit group 1 or the unit group 2 may be designed to include more or fewer optical transmitter modules.

In another possible implementation, the N optical transmitter modules are grid-based (that is, one unit group is one grid), each grid may include a plurality of optical transmitter modules, misalignment directions of optical transmitter modules in each grid are the same, and in a plurality of grids, at least one group of adjacent grids have different misalignment directions of optical transmitter modules. Optionally, each grid may include same optical transmitter modules. Further, optionally, optical transmitter modules in any two adjacent grids have different misalignment manners.

With reference to FIG. 21, there may be at least one grid in the grids, and the grid is referred to as a central grid for ease of description. A geometric center of light sources in the optical transmitter module in the central grid is not offset from the geometric center of the metalens. However, for a grid located around the central grid, a geometric center of light sources in the optical transmitter module in the grid is offset from the geometric center of the metalens, and an offset direction is consistent with a location direction of the grid relative to the central grid. For example, if a grid is located on the left of the central grid, a geometric center of light sources of the optical transmitter module in the grid is offset from the geometric center of the metalens, and an offset direction is left.

Optionally, the surrounding herein may be one or more rows (columns) that are outward and that use the grid as a center. Further, a plurality of optical transmitter modules in a same grid have a same offset direction but may have different offset distances, and the offset distances may be related to a distance between the optical transmitter modules and the central grid.

In a possible implementation, N>1, N optical transmitter modules are arranged in an array, the N optical transmitter modules are included in L unit groups, each of the L unit groups includes K optical transmitter modules, and both K and L are integers greater than 0.

The transmitting apparatus further includes L second metalens, the L second metalens are in a one-to-one correspondence with the L unit groups, and the L second metalens are configured to respectively adjust and control pointing angles of light beams emitted by the L unit groups. In other words, the N optical transmitter modules are divided into a plurality of unit groups, and optical transmitter modules in each unit group have a same misalignment direction. A second metalens is disposed outside the optical transmitter module, and the second metalens is configured to adjust and control pointing angles of light beams generated by one or more unit groups. In this way, the pointing angle of the light beam can be flexibly adjusted and controlled, which is conducive to improving detection quality.

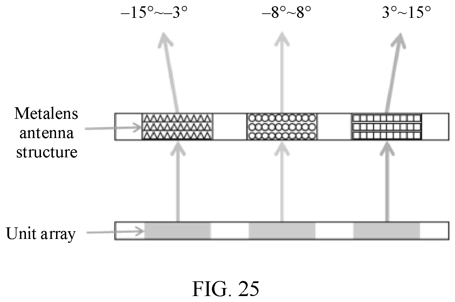

FIG. 24 is a top view of still another transmitting apparatus according to an embodiment of this application. The transmitting apparatus may include three unit groups (namely, a unit array shown in FIG. 24) and three metalens antenna structures (considered as a second metalens), and each unit group includes one or more optical transmitter modules. Each metalens antenna structure is configured to adjust and control pointing angles of light beams of one unit group. FIG. 25 is a diagram of pointing angle adjustment and control effect of a metalens antenna structure according to an embodiment of this application. Three metalens antenna structures respectively adjust and control light beams emitted by three unit arrays to point to the following three angle ranges: -15° to -3°, -8° to 8°, and 3° to 15°. Further, there may be an overlapping angle range in angle ranges of pointing directions of light beams in adjacent unit groups, to avoid that a formed light spot has an energy gap.

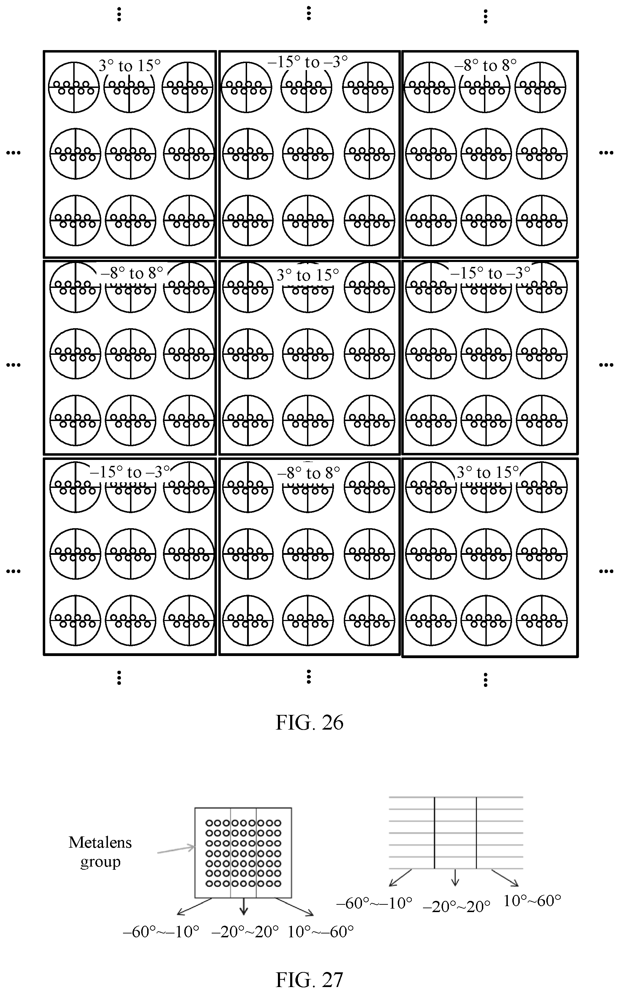

In conclusion, a pointing angle of a light beam of the optical transmitter module can be flexibly adjusted and controlled through the second metalens, to implement a plurality of pointing angle arrangement designs. FIG. 26 is a diagram of still another possible pointing angle according to an embodiment of this application. A transmitting apparatus includes a plurality of optical transmitter modules that are arranged in an array, and the plurality of optical transmitter modules are arranged into nine unit groups in a 3*3 matrix. The unit group in a first row and a first column points to 3° to 15°, the unit group in the first row and a second column points to -15° to -3°, and the unit group in the first row and a third column points to -8° to 8°. For pointing angles of other units, refer to FIG. 26. It can be learned that a pointing angle of each unit group may be flexibly adjusted and controlled, and is not limited by a location of the unit group. When a user needs light beams with different pointing angles, a light source arrangement manner does not need to be limited, and a pointing angle of a light source arranged at any position may be flexibly adjusted and controlled, thereby significantly increasing range for light field adjustment and control.

In a possible implementation, N is greater than 1, the transmitting apparatus includes a plurality of optical transmitter modules, and an area of a light transmission surface of a metalens of each optical transmitter module is greater than an area of a light-emitting region of a plurality of light sources. Further, in each optical transmitter module, light beams generated by a plurality of light sources may be incident on a central part of the metalens, to avoid being close to an edge part of the first metalens.

FIG. 27 is a top view of another transmitting apparatus according to an embodiment of this application. For example, the transmitting apparatus includes three optical transmitter modules, and the three optical transmitter modules each include three metalens groups. Each metalens group is configured to adjust and control pointing angles of light beams emitted by three columns of light sources (21 light sources), to form three groups of light beams. Each group of light beams includes seven transverse light beams, and pointing angles of the three light beams are respectively in the following angle ranges: -60° to -10°, -20° to 20°, and 10° to 60°. In this way, each metalens group is responsible for transmission in a specific field of view, and finally, large field of view transmission is implemented through field of view splicing, and a small distortion or no distortion is between entire light beams. Certainly, the designs of the three optical transmitter modules, the three angle ranges, and the 21 light sources are merely examples. In a specific implementation process, a range of a large field of view, a quantity of optical transmitter modules in a division region, and the like may be customized based on a specific requirement.

An embodiment of this application further provides a terminal. The terminal includes the foregoing transmitting apparatus and/or the foregoing detection apparatus. Optionally, the terminal may be an intelligent terminal or a transportation means like a vehicle, an uncrewed aerial vehicle, or a robot.

In the description of this application, orientation or location relationships indicated by terms such as "center", "up", "down", "left", "right", "vertical", "horizontal", "inside", and "outside" are orientation or location relationships shown in the accompanying drawings, and are merely for ease of description and simplification of this application, instead of indicating or implying that a specified apparatus or element need to have a specific orientation, and is constructed and operated in a specific orientation, and therefore the orientation or location relationships cannot be construed as a limitation on this application.

In addition, a Cartesian coordinate system and directions x, y, and z shown in embodiments of this application are example identifiers for ease of understanding, and are not intended to limit embodiments of this application. In a specific implementation process, there may be another design for a placement manner, an arrangement direction, and an orientation of a light beam of the device, and another coordinate system such as a spherical coordinate system may also be used as a coordinate system.

In embodiments of this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, the first metalens and the second metalens are merely for ease of description, but do not indicate differences in materials, structures, disposition sequences, importance, or the like of the first metalens and the second metalens.

## Claims

1. An optical transmitter module, wherein the optical transmitter module comprises M light sources and a first metalens, and M is an integer greater than 1; and
the first metalens is configured to process first light beams from the M light sources to obtain a second light beam.

2. The optical transmitter module according to claim 1, wherein the first metalens comprises a substrate and a first micro-nano structure layer borne on the substrate, and the first micro-nano structure layer comprises a plurality of first nano structure units.

3. The optical transmitter module according to claim 2, wherein the first metalens further comprises a second micro-nano structure layer borne on the substrate, and the second micro-nano structure layer comprises a plurality of second nano structure units; and
the first micro-nano structure layer and the second micro-nano structure layer are located on two opposite surfaces of the substrate.

4. The optical transmitter module according to any one of claims 1 to 3, wherein a cross-sectional area of a light transmission surface of the metalens is greater than an area of a light-emitting region, and the light-emitting region is a region formed by light-emitting surfaces surrounding the M light sources.

5. The method according to any one of claims 1 to 4, wherein the first light beams emitted by the M light sources are incident on the light transmission surface of the metalens, a minimum distance between the first light beam passing through the metalens and an edge of the light transmission surface of the metalens is greater than a first threshold, and the first threshold is greater than 0.

6. The optical transmitter module according to any one of claims 1 to 5, wherein the first metalens is configured to collimate the first light beam.

7. The method according to any one of claims 1 to 5, wherein a pointing angle of the second light beam is different from a pointing angle of the first light beam.

8. The optical transmitter module according to claim 7, wherein there is an offset between a geometric center of the M light sources and a geometric center of the first metalens.

9. A transmitting apparatus, wherein the transmitting apparatus comprises N optical transmitter modules according to any one of claims 1 to 8, and N is an integer greater than 0.

10. The transmitting apparatus according to claim 9, wherein the transmitting apparatus further comprises an optical lens group, and the optical lens group is configured to perform optical shaping on light beams from the N optical transmitter modules.

11. The transmitting apparatus according to claim 10, wherein the optical lens group comprises a first optical lens, and the first optical lens is configured to collimate the light beam from the N optical transmitter modules in a first direction to obtain a linear light beam.

12. The transmitting apparatus according to claim 10 or 11, wherein N>1, the N optical transmitter modules are arranged in an array, and differences of geometric center offsets between any two adjacent optical transmitter modules in a row of optical transmitter modules in the array are the same; and
a geometric center offset of each of the N optical transmitter modules is an offset between a geometric center of M light sources in the optical transmitter module and a geometric center of a first metalens.

13. The transmitting apparatus according to any one of claims 9 to 12, wherein N>1, and geometric center offset directions of a plurality of optical transmitter modules in the N optical transmitter modules comprise at least two offset directions; and
a geometric center offset direction of each of the plurality of optical transmitter modules is an offset direction of the geometric center that is of the M light sources in each optical reflection module and that is relative to the geometric center of the first metalens.

14. The optical transmitter module according to any one of claims 9 to 13, wherein N>1, the N optical transmitter modules are arranged in an array, the N optical transmitter modules are comprised in L unit groups, each of the L unit groups comprises K optical transmitter modules, and both K and L are integers greater than 0;
the optical transmitter modules in each unit group have a same geometric center offset direction; and
geometric center offset directions of the optical transmitter modules in two adjacent unit groups in the L unit groups are different.

15. The optical transmitter module according to any one of claims 9 to 13, wherein N>1, the N optical transmitter modules are arranged in an array, the N optical transmitter modules are comprised in L unit groups, each of the L unit groups comprises K optical transmitter modules, and both K and L are integers greater than 0; and
the transmitting apparatus further comprises L second metalens, the L second metalens are in a one-to-one correspondence with the L unit groups, and the L second metalens are configured to respectively adjust and control pointing angles of light beams emitted by the L unit groups.

16. The method according to claim 15, wherein each of the L second metalens comprises a substrate and a third micro-nano structure layer borne on the substrate, and the third micro-nano structure layer comprises a plurality of third nano structure units.

17. A detection apparatus, wherein the detection apparatus comprises the transmitting apparatus according to any one of claims 9 to 16 and a detector;
the transmitting apparatus is configured to propagate an emitted light beam to object space; and
the detector is configured to receive a return light beam from the object space, and the return light beam comprises an echo corresponding to the emitted light beam.

18. A terminal, wherein the terminal comprises the optical transmitter module according to any one of claims 1 to 8, or comprises the transmitting apparatus according to any one of claims 9 to 16, or comprises the detection apparatus according to claim 17.

19. The terminal according to claim 18, wherein the terminal is a vehicle, an uncrewed aerial vehicle, or a robot.
